(19) **Europäisches Patentamt**
**European Patent Office**
**Office européen des brevets**

(11) Veröffentlichungsnummer: **0 455 584 B1**

(12) # EUROPÄISCHE PATENTSCHRIFT

(45) Veröffentlichungstag der Patentschrift: **08.03.95**

(51) Int. Cl.6: **B29C 51/14**, B29C 51/08, B29C 51/26

(21) Anmeldenummer: **91810276.5**

(22) Anmeldetag: **12.04.91**

(54) Verfahren zum Herstellen eines becherförmigen, sterilisierbaren Behälters, sowie Behälter.

(30) Priorität: **26.04.90 CH 1437/90**

(43) Veröffentlichungstag der Anmeldung:
**06.11.91 Patentblatt 91/45**

(45) Bekanntmachung des Hinweises auf die
Patenterteilung:
**08.03.95 Patentblatt 95/10**

(84) Benannte Vertragsstaaten:
**BE CH DE DK FR GB LI NL**

(56) Entgegenhaltungen:
EP-A- 0 140 282     EP-A- 0 307 833
DE-A- 2 321 980     FR-A- 2 105 038
FR-A- 2 201 671     FR-A- 2 396 601
FR-A- 2 549 749     FR-A- 2 600 936
US-A- 3 349 153     US-A- 3 444 022

(73) Patentinhaber: **ALUSUISSE-LONZA SERVICES AG**
**Feldeggstrasse 4**
**CH-8034 Zürich (CH)**

(72) Erfinder: **Muggli, Olivier Y.**
**Schwanenfelsstrasse 12a**
**CH-8212 Neuhausen am Rheinfall (CH)**
Erfinder: **Ziegler, Andreas**
**Stettemerstrasse 145**
**CH-8207 Schaffhausen (CH)**

EP 0 455 584 B1

**Beschreibung**

Die Erfindung betrifft ein Verfahren zum Herstellen eines becherförmigen, sterilisierbaren Behälters aus einem streckziehfähigen Verbundlaminat, sowie einen derartigen Behälter und die Verwendung solcher Behälter.

Es ist ein Verfahren zum Herstellen eines becherförmigen Behälters bekannt, bei dem ein Verbundlaminat aus mindestens einer Metallfolie einer Stärke von nicht mehr als 40 $\mu$m und einer Kunstharzfolie durch Ausformen aus dem ebenen Laminat unter Faltenbildung in der Seitenwand hergestellt wird. Die Faltenbildung wird durch eine entsprechende Nutung des Formwerkzeuges, wie eines Stempels, bewirkt. Die Falten sollen auch bei Verwendung dünner Metallfolien mit einer Wandstärke von weniger als 40 $\mu$m Riss- oder Porenbildung vermeiden und so gewünschte Dichtheitsanforderungen für eine Langzeitkonservierung gewährleisten (EP 0 140 282 A2). Die Poren- oder Rissbildung lässt sich jedoch gerade an den Faltstellen nicht mit Sicherheit ausschliessen. Abgesehen davon ist das Erscheinungsbild des mit Falten in der Seitenwand versehenen Behälters unbefriedigend. Schliesslich ist zur Bildung der Falten ein hoher Materialaufwand erforderlich.

Aus der DE-A-23 21 980 ist eine Vorrichtung bekannt zum Formen von Vertiefungen in Bändern. Das Folienverbundmaterial besteht beispielsweise aus einem 40 $\mu$m dicken Aluminiumband und einer beidseitigen Polyolefinbeschichtung von 15 $\mu$m resp. 20 $\mu$m. Um eine Rissbildung im Aluminium zu vermeiden, werden verhältnismässig dicke Aluminiumschichten beschrieben.

In der FR-A-2549749 wurde ein Stempel zum Tiefziehen von Folien beschrieben, der beim Tiefziehen von Folien von weniger als 200 $\mu$m die Bildung von Falten verhindert. Der Stempel ist jedoch nur zum Tiefziehen vorgesehen, während für das kritische Streckziehen der Stempel nicht geeignet scheint.

Es ist daher Aufgabe der Erfindung, ein Verfahren der eingangs beschriebenen Art anzugeben, mit dem sich ein Behälter faltenfrei herstellen lässt, wobei bei geringer Wandstärke der Aluminiumfolie die für Langzeitskonservierungseigenschaften erforderliche perfekte Barriereeigenschatt z.B. Gasdichtheit in beiden Richtungen gewährleistet ist.

Vorliegende Erfindung betrifft daher ein Verfahren gelöst zum Herstellen eines becherförmigen sterilisierbaren Behälters (10) aus einem streckziehfähigen Verbundlaminat (10') einer Gesamtwandstärke zwischen 30 und 200 $\mu$m mit einer Aluminiumfolie (14) einer Starke kleiner 40 $\mu$m, einer siegelfähigen Kunststoffinnenschicht (12) hohen Dehnvermögens und einer Kunststoffaussenschicht (16) hohen Dehn- und Lastaufnahmevermögens, wobei die Seitenwand (17) des Behälters (10) unter einem Seitenwandwinkel (a) bezüglich der Richtung senkrecht zum Behälterboden verläuft. Die Aufgabe wird dadurch gelöst, dass das Verbundlaminat (10') bei einem Seitenwandwinkel (a) von im wesentlichen $\leq$ 30° unter Verwendung glattwandiger Formwerkzeuge (20,30,22) faltenfrei kombiniert tief- und streckgezogen wird, wobei das kombinierte Tiefziehen und Streckziehen mittels eines Stempels erfolgt, wobei das Verbundmaterial (10') in einem Tiefziehschritt auf 30-70% der Tiefe (H) des fertigen Behälters tiefgezogen und in einem anschliessenden Tiefzieh-Streckziehschritt auf 75-95% der Tiefe (H) des fertigen Behälters gezogen wird und in einem danach anschliessenden Streckziehschritt auf die Tiefe und Weite der fertigen Behälters (10) gebracht wird.

In einer zweckmässigen Ausführungsform ist das beschriebene Verfahren dadurch gekennzeichnet, dass bei einem Seitenwandwinkel (a) in einem Bereich 15° bis 30° das kombinierte Tiefziehen und Streckziehen erfolgt.

Der Unterschied zwischen einem Tiefziehen und einem Streckziehen besteht bekanntlich darin, dass beim Tiefziehen das Material in das Formwerkzeug nachfliessen kann, während es beim Streckziehen am Rand eingespannt gehalten wird, so dass sich die Wandstärke aufgrund einer Dehnung vermindert.

Dem Verfahren nach der Erfindung liegt in beiden oben erörterten Ausgestaltungen der überraschende und bisher nicht praktizierte Gedanke zugrunde, ein streckziehfähiges Verbundlaminat ganz oder zumindest teilweise einem Tiefziehen zu unterwerfen. Erstaunlicherweise lässt ein streckziehfähiges Verbundlaminat sich ausgezeichnet ohne Faltenbildung tiefziehen oder tief- und streckziehen. Die hohe Dehnfähigkeit des verwendeten Streckziehlaminates ermöglicht es, bei perfekten Barriereeigenschaften sehr hohe Dehnungsgrade zu erzielen, und zwar auch bei Wandstärken der Aluminiumfolie bis herab zu beispielsweise 8 $\mu$m. Solch gute Tiefzieheigenschaften konnte der Fachmann aufgrund des vergleichsweise hohen Kunststoffanteiles im Verbundlaminat nicht erwarten. So wurden bisher streckziehfähige Verbundlaminate nicht durch Tiefziehen verarbeitet.

Mit dein Verfahren nach der Erfindung gelingt es, poren- und faltenfrei Umformgrade von radial über 20% und tangential etwa 10% zu erzielen, während übliches Tiefziehmaterial einer Dicke von 80 bis 100 $\mu$m in der Regel nur maximale Formänderungen zwischen 2 und 8% beim Tiefziehen erträgt.

2

Vorzugsweise erfolgt das kombinierte Tief-Streckziehen bei einem Verfahren nach der Erfindung schmierungslos; denn die Schmierung hat Nachteile hinsichtlich der Haftung zwischen dem Verbundlaminat und einem zur Erhöhung der Steifigkeit darauf aufgespritzten Kunststoff sowie im Hinblick auf Schmierrückstände, die im fertigen Behälter verbleiben und eine aufwendige Reinigung vor dem Befüllen erfordern würden.

Ein Stempel zum Durchführen des Ziehverfahrens nach der Erfindung, und insbesondere der Teil des Stempels der mit dem Verbundlaminat in Berührung steht, soll nach den Erkenntnissen der Erfinder vorteilhaft aus einem Werkstoff hoher Gleitfähigkeit, mechanischer Stabilität und Abriebfestigkeit bestehen. Da die Umformkräfte der verwendeten Streckziehlaminate vergleichsweise klein sind, können ausser Metall auch Kunststoffe, wie z.B. Siliconkautschuke, wie Polyetrafluorethylen oder Polymethylpenten als bevorzugte Stempelwerkstoffe und insbesondere Ueberzüge über dem Stempelteil, der mit dem Verbundlaminaten in Berührung steht, eingesetzt werden.

Beim Tiefziehen, Tief-Streckziehen, als auch Streckziehen kann sowohl ein starrer Stempel als auch ein radial expandierbarer Stempel eingesetzt werden. Während das Tief-, das Tief-Streck- und Streckziehen gleichzeitig mit gesteuerter Niederhaltekraft erfolgt, kann beispielsweise zunächst ein Tiefziehschritt zum Tiefziehen und ein Tief- und Streckziehschritt des Verbundlaminates auf die Endtiefe des fertigen Behälters ohne radiale Expansion des Stempels und nachfolgend ein Streckziehschritt unter radialer Expansion des Stempels auf die Weite des fertigen Behälters durchgeführt werden. Vorzugsweise besteht der Stempel in diesem Fall aus einem flexiblen, gummielastischen Werkstoff, wie einem Silikonwerkstoff, der unter axialer Druckbelastung radial expandiert.

Zur Erzielung der erforderlichen Steifigkeit und Beulfestigkeit kann in einem weiteren Verfahrensschritt auf die Aussenseite des Behälters eine weitere versteifende Kunststoffschicht angespritzt werden.

Ein Behälter gemäss der Erfindung besteht vorteilhaft aus einem Verbundlaminat mit einer Aluminiumfolie einer Dicke zwischen 8 und 40 $\mu$m zwischen einer Kunststoffinnenschicht einer Dicke zwischen 30 und 80 $\mu$m und einer Kunststoffaussenschicht einer Dicke zwischen 1 und 40 $\mu$m, wobei die Behälterwandung faltenfrei ist.

Bevorzugte Werkstoffe für die verschiedenen Schichten des Verbundlaminates sind Polyolefine, Polyester, Polyethylen-terephtalate, Polyvinylchlorid, Polystyrole, Polyamide oder Copolymerisate. Zu den Beispielen von Werkstoffen, die ganz besonders bevorzugt sind, gehören Polystyrol, Polypropylen, Polyethylen, Polyamid PA 6, PA 66 oder PA 12.

Geeignet sind beispielsweise uniaxial oder biaxial orientierte Kunststoff-Folien, beispielsweise wie vorstehend genannt und bevorzugt aus Polypropylen, Polyethylen und Polyamid als Schichten des Verbundlaminates. Unter den Folien sind die biaxial orientierten Folien wiederum besonders geeignet.

In der Praxis finden vor allem Laminate Verwendung, die aus biaxial orientierten Folien aus Polypropylen, Polyethylen oder Polyamiden aufgebaut sind, wobei die Folien zweckmässig bei einer angewendeten Dicke von 10 bis 40 $\mu$m bei 10 bis 15% Dehnung Spannungswerte von 70 bis 80 MPa und im wesentlichen linear ansteigend beispielsweise bei 40% Dehnung Spannungswerte von 150 bis 250 MPa aufweisen.

Besonders geeignet sind beispielsweise Laminate die aus Innen-und/oder Aussenfolien aus biaxial orientiertem Polypropylen in einer Dicke von 30 bis 40 $\mu$m, die bei einer Dehnung von 15% Spannungswerte zwischen 70 und 80 MPa und bei einer Dehnung von 40% Spannungswerte von 230 bis 250 MPa aufweisen, oder aus biaxial orientiertem Polyethylen in einer Dicke von 17 bis 23 $\mu$m, die bei einer Dehnung von 15% Spannungswerte zwischen 70 und 80 MPa und bei einer Dehnung von 40% Spannungswerte von 140 bis 160 MPa aufweisen, und/oder Polyamid in einer Dicke von 12 bis 17 $\mu$m, die bei einer Dehnung von 15% Spannungwerte zwischen 70 und 80 MPa und bei einer Dehnung von 40% Spannungswerte von 120 bis 150 MPa aufweisen, aufgebaut sind.

In der Praxis beträgt ein zweckmässiger oberer Grenzwert für den Seitenwandwinkel zwischen der Seitenwand und der Senkrechten bezüglich des Behälterbodens etwa 30°, der untere Grenzwert wird durch die Senkrechte, entsprechend 0°, gebildet.

Die versteifende, angespritzte Kunststoffaussenschicht hat vorteilhaft eine Dicke zwischen 0,1 und 0,6 mm und ist so ausgebildet, dass bei einer Einbeulung im Gebrauch das Material selbsttätig wieder in seine Ausgangslage zurückspringt ("spring-back"-Eigenschaften).

Am fertigen Behälter ist eine umlaufende, geschlossene Randzone ausgebildet, welche die Behälteröffnung umgebend mit der siegelfähigen Kunststoffinnenschicht nach oben weist. Auf diese Randzone wird nach dem Befüllen eine Siegelschicht beliebiger bekannter Ausführung heissgesiegelt, was aufgrund der Faltenfreiheit des Behälters ohne Dichtheitsprobleme möglich ist.

Die Erfindung ist im folgenden anhand schematischer Zeichnungen an Ausführungsbeispielen in weiteren Einzelheiten näher erläutert. Es zeigen:

Fig. 1 bis 3    drei Verfahrensstufen beim Herstellen eines Behälters gemäss der Erfindung aus einem Verbundlaminat durch Tief-, kombiniertes Tief- und Streckziehen und Streckziehen mittels eines starren Stempels;

Fig. 4 bis 6      drei Verfahrensstufen beim Herstellen eines Behälters gemäss der Erfindung aus einem Verbundlaminat mittels eines flexiblen Stempels aus einem gummielastischen Werkstoff;

Fig. 7      ein Diagramm mit den auf den Stempel und den Niederhalter während der Herstellung gemäss den Figuren 1 bis 6 wirkenden Kräfte über der Zeit;

Fig. 8      einen Teilquerschnitt durch einen fertigen Behälter gemäss der Erfindung;

Fig. 9      einen Ausschnitt des fertigen Behälters nach dem kombinierten Tief-/Streckziehen mit einem gummielastischen Stempel in einer perspektivischen Teilansicht;

Fig. 10      ein Diagramm mit der relativen Dicke des Behälters an verschiedenen Messpunkten, wobei die den gestrichelten Linien zugeordneten Ziffern zu den mit gleichen Ziffern bezeichneten Orten in Figur 9 gehören.

Besonders zweckmässig ist bei beschriebenem Verfahren, dass das kombinierte Tiefziehen und Streckziehen mittels eines radial expandierbaren Stempels erfolgt und während und/oder nach dem Streckziehschritt unter radialer Expansion des Stempels (30) das Verbundmaterial (10') auf die Tiefe (H) und Weite des fertigen Behälters gebracht wird.

Bevorzugt beim beschriebenen Verfahren besteht der Stempel (30) auf den verformungswirksamen Seiten aus einem flexiblen gummielastischen Werkstoff, der unter axialer Druckbelastung radial expandiert.

In einer weiteren Ausführungsform des Verfahrens, wie beschrieben erfolgt das Tiefziehen, das Tief-Streckziehen und das Streckziehen nacheinander mit gesteuerter Niederhaltekraft des Niederhalters. Bei diesem Verfahren wird bevorzugt dass der Tiefziehschritt mit einer Niederhaltekraft des Niederhalters derart erfolgt, dass das zum Tiefziehschritt benötigte Laminat-Material aus dem Bereich der Matrize und des Niederhalters nachgezogen wird dass der Tiefzieh-Streckziehschritt mit einer Niederhaltekraft des Niederhalters derart erfolgt dass das benötigte Laminat-Material nur noch teilweise nachgezogen und gleichzeitig gestreckt wird und dass der Streckziehschritt mit einer Niederhaltekraft des Niederhalters derart erfolgt, dass kein Laminat-Material aus dem Bereich der Matrize und des Niederhalters nachzieht und dass das im Bereich zwischen Matrize und Stempel befindliche Material gestreckt wird.

Der Tiefzieh-Streckziehschritt kann so verstanden werden, dass das zur Ausformung des herzustellenden Behälters zwischen Formwerkzeug und Stempel notwendige Material nur noch teilweise nachgezogen wird und durch gleichzeitiges Strecken des schon nachgezogenen Materials die jeweilige Behältertiefe erreicht wird.

In der Praxis wird das Verfahren beispielsweise derart ausgeführt, dass der Tiefziehschritt (Phase $I_n$) bei einer Niederhaltekraft des Niederhalters von 0,8 bis 2 kN und/oder einer spezifischen Niederhaltekraft von 10 bis 47 $N/cm^2$, die bei 0% der Behältertiefe (H), die auch dem Stempelweg entspricht, beginnt und bei 40 bis 60% der Behältertiefe (H) endet, dass der Tiefzieh-Streckziehschritt (Phase $II_n$) anschliesst, wobei die Niederhaltekraft des Niederhalters auf 1 bis 2,3 kN und/oder auf eine spezifische Niederhaltekraft von 20 bis 50 $N/cm^2$, erhöht wird, bis 75 bis 90% der Behältertiefe (H) erreicht sind und dann anschliessend der Streckziehschritt (Phase $IIIn$) mit einer Niederhaltekraft des Niederhalters von über 30 kN und insbesondere 40 bis 60 kN und/oder auf eine spezifische Niederhaltekraft von über 50 $N/cm^2$ und insbesondere von 52 bis 1000 $N/cm^2$, bis zu 100% der Behältertiefe (H) erfolgt.

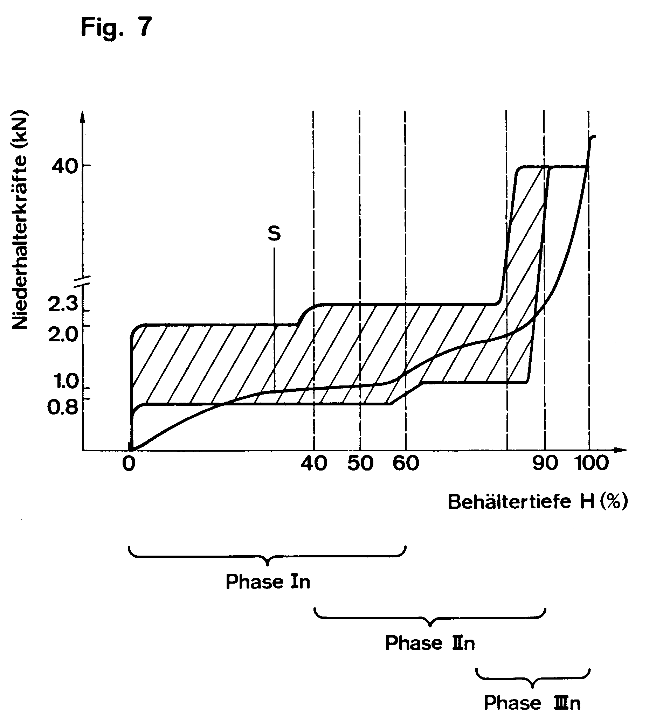

In Figur 7 sind die Schritt der Niederhaltekräfte gegenüber der Behältertiefe aufgezeigt. Die Behältertiefe, dargestellt durch die Abszisse teilt sich in die Phasen $I_n$, $II_n$ und $III_n$ auf, die Ordinate gibt die Niederhaltekräfte wieder.

Beispielhaft beschreibt der schraffierte Bereich die optimale Verfahrensführung. In der Phase $I_n$, beginnend bei 0% bis etwa 40 bis 60% der Behältertiefe wird die Niederhaltekraft konstant auf 0,8 bis 2,0 kN und/oder auf einer spezifischen Niederhaltekraft von 10 bis 47 $N/cm^2$, gehalten. Das Laminat kann im diesem Bereich leicht durch den Spalt zwischen Niederhalter und Matrize nachrutschen.

In der Phase $II_n$, die sich beispielsweise ab 40 bis 90% der Behältertiefe anschliesst, wird die Niederhaltekraft gesteigert, wobei Werte von 1,0 kN bis 2,3 kN und/oder spezifische Niederhaltekräfte von 20 bis 50 $N/cm^2$, zweckmässig sind. Dabei wird das Laminat stärker zwischen Matrize und Niederhalter gehalten, wobei das Laminat bereits leicht gestreckt aber auch noch begrenzt nachrutschen kann.

In der Phase $III_n$ die beispielsweise bei 75% bis 90% Behältertiefe (H) beginnt und sich bis 100% der Behältertiefe erstreckt, wird die Niederhaltekraft soweit gesteigert, beispielsweise auf spezifische Niederhaltekräfte von über 50 $N/cm^2$ und insbesondere von 52 bis 1000 $N/cm^2$, dass das Laminat zwischen Niederhalter und Matrize festgehalten wird und kein Nachrutschen mehr möglich ist. Dadurch wird das bereits in der Matrize befindliche Material gedehnt oder gestreckt.

Ist der Stempel beispielsweise als gummielastischer Stempel ausgebildet, erreicht unter dem Druck der konkav ausgebildeten Stempelunterseite das Laminat bereits zu Beginn der Phase III den Matrizenboden und unter steigendem Druck beginnt sich das Laminat radial auszudehnen.

Beispiele typischer Folien, die derart nach der Erfindung verarbeitet werden können, weisen die Schichten 35 $\mu$m oPP/20 $\mu$m Al/35 $\mu$m oPP oder 35 $\mu$m oPP 35 $\mu$m Al/40 $\mu$m PP auf (oPP = biaxial orientiertes Polypropylen, PP nicht orientiertes Polypropylen).

Zweckmässig geschieht bei vorliegendem Verfahren das Tiefziehen, das Tief-Streckziehen und das Streckziehen schmierungslos.

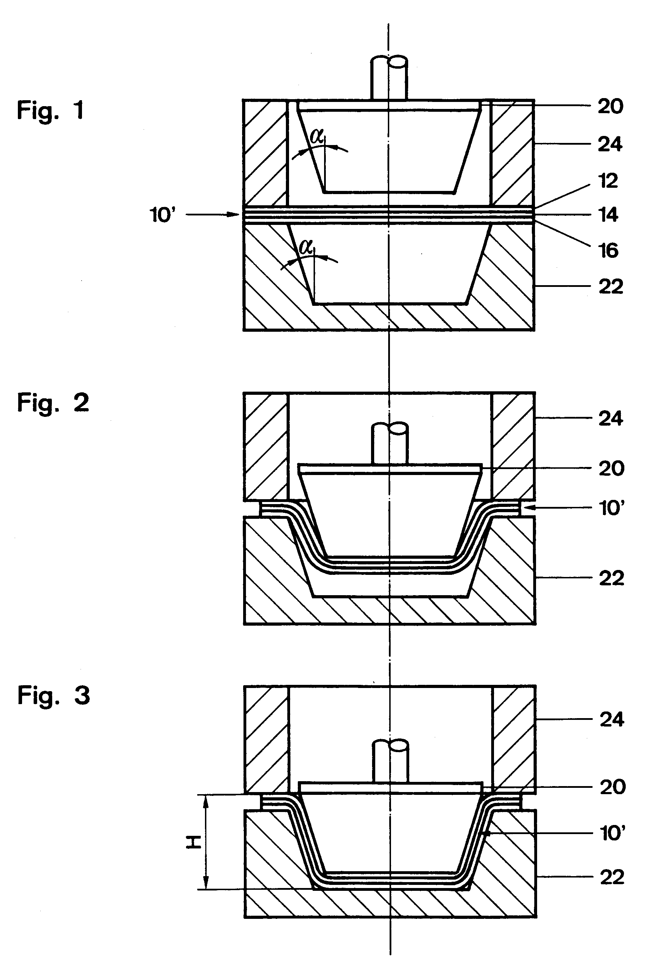

Anhand der Figuren 1 bis 3 wird nun ein Verfahren beschrieben, bei dem ein streckziehfähiges Verbundlaminat 10' aus einer Aluminiumfolie 14 einer Dicke kleiner 40 $\mu$m, einer siegelfähigen Kunststoffinnenschicht 12 hohen Dehnvermögens und einer Kunststoffaussenschicht 16 hohen Dehn- und Lastaufnahmevermögens in einem Formwerkzeug mit einem Stempel 20, einer Matrize 22 und einem Niederhalter 24 ausgehend vom Zustand nach Figur 1 verformt werden. Der Stempel 20 besteht dabei aus einem starren Material und insbesondere die mit dem Verbundlaminat in Berührung kommenden Flächen des Stempels aus z.B. Polytetrafluorethylen (PTFE), aus Polymerthylpenten (PMP) oder aus Metall, wie Stahl. Diese Werkstoffe haben sich als hinreichend gleitfähig, mechanisch stabil und abriebfest beim schmierungslosen, faltenfreien Tiefziehen erwiesen, sofern der Seitenwandwinkel a steil, d.h. beispielsweise 30° ist.

In der Verfahrensstufe nach Figur 2 hat der starre Stempel 20 schon einen Teil seines Weges nach unten zurückgelegt.

Das Verbundlaminat 10' fliesst dabei kontrolliert durch den Ziehspalt zwischen dem Niederhalter 24 und der Matrize 22 nach. Die Niederhaltekraft wird dabei auf einem niedrigen Wert in der Phase In (vgl. Figur 7) konstant gehalten.

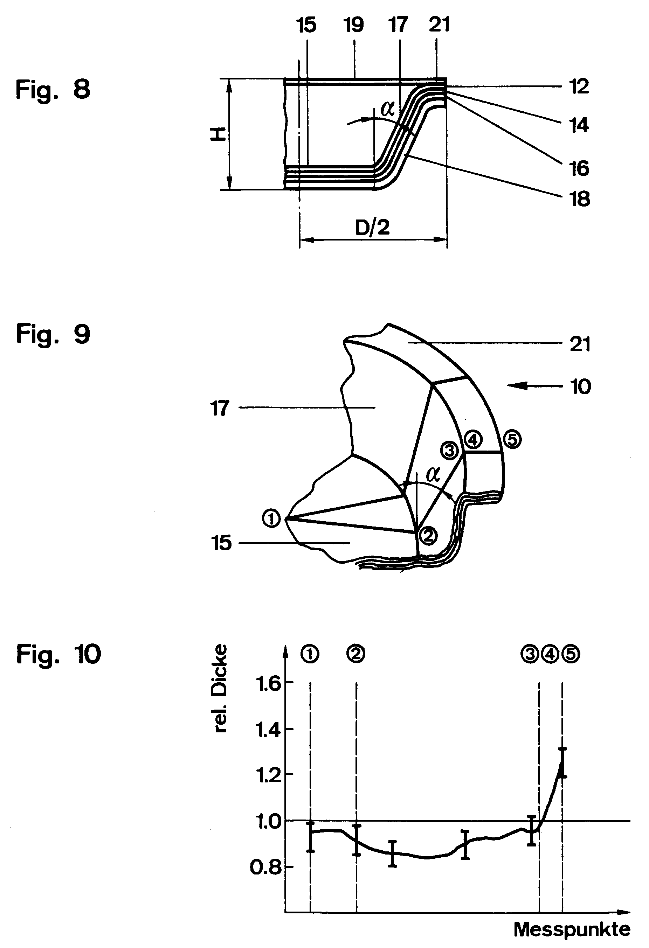

Figur 3 zeigt einen Zustand, bei dem der Stempel 20 die Endstellung seines Hubes nach unten erreicht hat. Das Material ist in dieser Stellung auf die Fertigtiefe H des Behälters (Figur 8) gezogen. Die Niederhaltekraft wird hierbei gemäss Phase IIIn in Figur 7 erhöht. Dabei wird der in Figur 8 und Figur 9 mit 21 bezeichnete ringförmige Rand des Behälters egalisiert, so dass eine für eine spätere Siegelung gleichmässige Oberfläche erzielt wird. Gleichzeitig wird der Behälter in die Endgestalt ausgeformt.

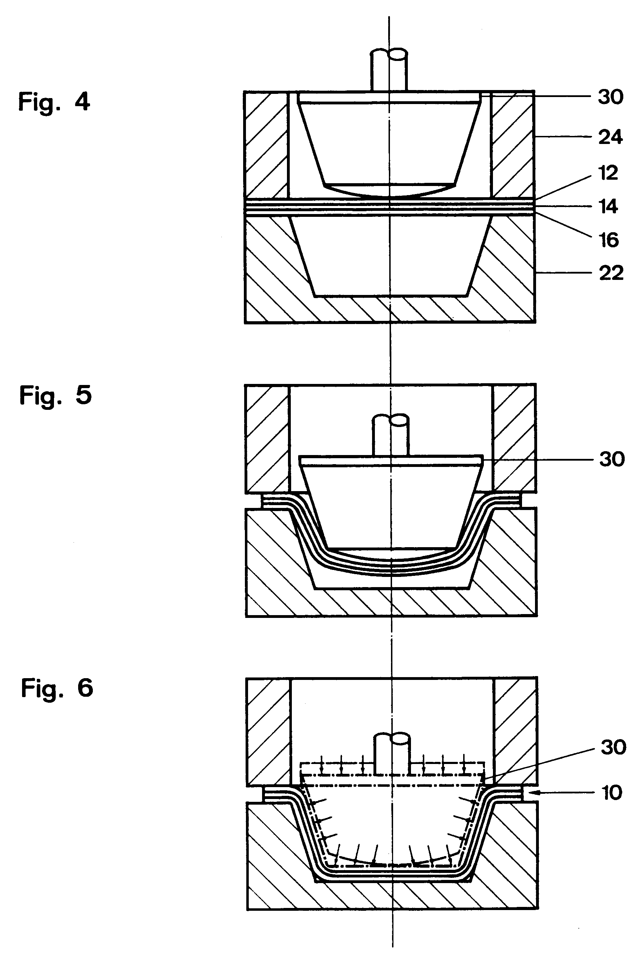

Bei dem anhand der Figuren 1 bis 3 beschriebenen Verfahren findet in Phase IIn ein Tiefziehen und ein Streckziehen zeitlich überlagert statt, aber auch schon in der Phase In, d.h. in der Zwischenstufe der Herstellung zwischen den Verfahrensstufen gemäss Figur 1 und Figur 3 wird das Verbundlaminat am Rand mit einer konstanten, wenn auch kleinen Niederhaltekraft festgehalten. Dies gilt auch bei dem Arbeiten mit einem gummielastischen Stempel 30 aus einem Silikonmaterial. In Figur 4 ist der Ausgangszustand entsprechend Figur 1 dargestellt. In Figur 5 ist ein Zwischenzustand bei teilweise herabgefahrenem Stempel 30 gezeigt. In Figur 7 ist beispielhaft eine Kurve "S" eingezeichnet, wobei die Ordinate die Stempelkraft des gummielastischen Stempels 30 ausdrückt. Die Stempelkraft nimmt hier in Phase In und IIn relativ gleichförmig mit geringer Steigung zu, um dann in Phase IIIn steil anzusteigen. Dieser Anstieg beginnt zu dem Zeitpunkt, in welchem der Stempel 30 die gestrichelte Position in Figur 6 erreicht hat, wobei er mit seiner Mitte das Verbundlaminat gerade an den Matrizenboden gezogen hat. Bei weiterem Absenken des Stempels expandiert dieser radial so, dass er das Verbundlaminat in der durch die Pfeile angedeuteten Weise allseitig an die Matrizenwandung mit zunehmender Presskraft gemäss Phase IIIn der Kurve "S" in Figur 7 andrückt. Der Stempel 30 wird also mit zunehmender axialer Druckbelastung radial in der durch die Pfeile angedeuteten Weise in einen strichpunktiert dargestellten Endzustand expandiert.

Figur 8 zeigt einen Halbschnitt durch den fertigen Behälter, wobei zusätzlich noch eine zur Erzielung der gewünschten Steifigkeit bzw. Beulfestigkeit des Behälters aussen angespritzte Kunststoffschicht 18 gezeigt ist.

Der nach Figur 10 gemessene Dickenverlauf beim kombinierten Tief-/Streckziehen liegt zwischen demjenigen eines reinen Streckziehens (stetige Zunahme der Dicke vom Boden bis zum Randbereich mit dem Endwert 1) und der gemessenen abgebildeten Dickenkurve beim Tiefziehen. Vom Boden- bis zum Randbereich (zwischen den Punkten 1 und 5) liegt die Dicke unterhalb der Ausgangsdicke. Dies bedeutet, dass das Material gestreckt worden ist, so dass sich keine Faltungen gebildet haben.

Vorliegende Erfindung betrifft auch einen becherförmigen, sterilisierbaren Behälter aus einem streckziehfähigen Verbundlaminat (10') mit einer Aluminiumfolie (14) einer Dicke kleiner 40 $\mu$m, einer siegelfähigen Kunststoffinnenschicht (12) hohen Dehnvermögens und einer Kunststoffaussenschicht (16) hohen Dehn- und Lastaufnahmevermögens, wobei die Seitenwand des Behälters unter einem Seitenwandwinkel (a) bezüglich der Richtung senkrecht zum Behälterboden verläuft, der dadurch gekennzeichnet ist, dass die Aluminiumfolie (14) eine Dicke zwischen 8 und 40 $\mu$m aufweist, dass die Kunststoffinnenschicht (12) eine Dicke zwischen 30 und 80 $\mu$m aufweist, dass die Kunststoffaussenschicht (16) eine Dicke zwischen 1 und 40 $\mu$m aufweist und dass die Behälterwandung faltenfrei ist.

Im folgenden ist der Behälteraufbau, wie er in Figur 8 beispielhaft dargestellt ist, näher erläutert, und zwar von innen nach aussen. Die Kunststoffinnenschicht 12 weist zum Produkt hin, mit dem der Behälter zu befüllen ist, z.B. zu einem Nahrungsmittel- oder Lebensmittelprodukt. Sie hat daher eine Korrosionsschutzfunktion. Darüber hinaus dient die Kunststoffinnenschicht 12 auch zur Unterstützung der Aluminiumfolie 14, wobei sie diese gegenüber korrosiven Füllprodukten schützt. Schliesslich dient die Kunststoffinnenschicht als Siegelschicht zum Aufsiegeln einer Deckelfolie 19. Die Kunststoffinnenschicht 12 kann ebenso wie die Kunststoffaussenschicht 16 auf die Aluminiumfolie kaschiert oder lackiert sein. Es können deckende, d.h. pigmentierte, oder mit Farbstoffen eingefärbte Folien verwendet werden. Alternativ kann ein mit Pigmenten z.B. $TiO_2$ oder Farbstoffen eingefärbter Kaschierkleber bzw. Lack verwendet sein. Die Dicke der Kunststoffinnenschicht 12 liegt in einem Bereich zwischen 30 und 70 $\mu$m. Als Materialien kommen im Hinblick auf die verlangte Siegelfähigkeit und Sterilisierfähigkeit zweckmässig Polypropylen (PP), Polyethylen (PE) und Polystyrol (PS), Polyamide PA 6, PA 66 oder PA 12 oder deren Co-Polymerisate zur Anwendung.

Die Aluminiumfolie 14 dient als gasdichte Barriereschicht. Aufgrund ihrer absoluten Undurchlässigkeit insbesondere gegenüber Sauerstoff und auch anderen Gasen, Wasserdampf und Aromastoffen sorgt sie für Langzeitkonservierungseigenschaften (z.B. länger als 1 Jahr) der in dem Behälter verpackten sterilisierten Produkte. Die Dicke der Aluminiumfolie 14 liegt in der Praxis deutlich unter 40 $\mu$m, vorzugsweise in einem Bereich zwischen 8 und 25 $\mu$m. Die Aluminiumfolie 14 besteht vorteilhaft aus Aluminium mit einem Al-Gehalt von 98,6% und mehr oder aus einer Aluminium-Legierung, z.B. der Legierung 8102, die besonders feinkörnig ist und mit Vorteil bei streckziehfähigen Verbundlaminaten eingesetzt wird.

Die Kunststoffaussenschicht 16 dient als Haftvermittler zwischen dem umgeformten Verbundlaminat und der angespritzten Kunststoffschicht 18 sowie als Dehnvermittler bei dem beschriebenen Umformen gemäss der Erfindung. Die Dicke der Kunststoffaussenschicht 16 kann zwischen 1 und 40 $\mu$m betragen. Die Kunststoffaussenschicht 16 kann auf die Aluminiumfolie 14 als Film lackkaschiert oder extrusionskaschiert sein. Die Schicht 16 muss die beim Umformen auftretenden Kräfte und Dehnungen der Aluminiumfolie 14 aufnehmen können. Je nach dem umspritzten Kunststoff besteht die Kunststoffaussenschicht 16 beispielsweise aus orientiertem Polyethylen (oPE), orientiertem Polypropylen (oPP), orientiertem Polyester oder orientiertem Polyamid oder aus den Copolymeren der genannten Kunststoffe. Bei solchen Copolymeren ist das niedrigere Lastaufnahmevermögen gegenüber gereckten Folien durch erhöhte Dicke (20 bis 40 $\mu$m) auszugleichen. Dank der Stützwirkung der Kunststoffaussenschicht 16 auf der Aluminiumfolie 14 können die hohen Dehnungen (Figur 10) von mehr als 20% ohne Poren in der Aluminiumschicht 14 erreicht werden.

Die lackkaschierte oder extrusionskaschierte Kunststoffaussenschicht 16 kann auch mit hoch dehnfähigen Lacken aus Polyurethan-Polyvinyl-, Polyester- oder Epoxyharzen gebildet sein.

Bevorzugte Behälter, wie oben beschrieben, sind dadurch gekennzeichnet, dass das Verbundlaminat (10') einen Schichtaufbau (von aussen nach innen) mit 12 bis 20 $\mu$m Polyethylenterephtalat/8 bis 25 $\mu$m Aluminium/50 bis 75 $\mu$m Polyethylen hat.

Weiter sind Behälter bevorzugt, die nach vorliegender Erfindung aussen eine weitere versteifende Kunststoffschicht (18) einer Dicke zwischen 0,1 bis 0,6 mm an die Aussenseite des Behälters (10) angespritzt ist.

Die weitere versteifende Kunststoffschicht (18) kann beispielsweise aus Polypropylen, Polyethylen oder deren Copolymeren, Polyethylenterephtalat, Polyamid, recyclierten Kunststoffen, Acryl-Butadien-Styrol, Polykarbonat oder geschäumten Kunststoffen, wie geschäumtem Polypropylen, Polyethylen, Polystyrol oder Polyurethan, bestehen oder diese Kunststoffe enthalten.

Bevorzugte Behälter nach vorliegender Erfindung sind mittels einer Siegelschicht (19), die auf die siegelfähige Kunststoffinnenschicht (12) in einer umlaufenden, geschlossenen Randzone (21) heissgesiegelt ist, verschlossen.

Das beschriebene Aluminium-Kunststoff-Verbundlaminat stellt aufgrund seines Aufbaus mit vergleichsweise niedrigem Aluminiumanteil und hohem Kunststoffanteil ein streckziehfähiges Laminat dar. Trotz der relativ dünnen Aluminiumfolie sind Umformgrade von 10 bis 45% erzielbar. Als ohne weiteres erreichbares Verhältnis aus Durchmesser D zur Tiefe H eines erfindungsgemäss hergestellten Behälters ist ein Wert in der Grössenordnung von beispielsweise D:H = 3:1 anzusetzen, wobei dank des erzielbaren Umformungsgrades auch z.B. Verhältnisse D:H von 10:1 bis 1:1 und besonders 5:1 bis 2:1 realisierbar erscheinen.

Der allein aus dem Verbundlaminat mit den Schichten 12, 14 und 16 geformte Behälter hat nur geringe Eigenstabilität, die normalerweise in der Praxis nicht ausreicht. Aus diesem Grunde kann auf die Aussenseite des aus dem Verbundlaminat 10' fertig geformten Behälters 10 eine stabilisierende Kunststoffschicht 18 aufgespritzt werden. Diese Kunststoffschicht liegt in der Praxis in einem Dickenbereich zwischen 0,1 und 0,6 mm. Die Anspritztemperatur des Kunststoffes muss zum Beispiel bei einem Homo-Polypropylen in einem Bereich von 240 bis 260 ° C liegen, um eine ausreichend haftende Verbindung mit der Kunststoffaussenschicht 16 des vorgeformten Verbundlaminat-Behälters 10 herzustellen. Durch gleichzeitige oder nachträgliche chemische oder physikalische Vernetzung des Kunststoffes kann die Steifigkeit noch erhöht werden.

EP 0 455 584 B1

Zur Reduzierung der Schichtdicke unter gleichzeitiger Erhöhung der Steifigkeit kann das Polymer warm gereckt werden. Die dabei erzielte Orientierung erhöht auch die Festigkeit.

Zur Erhöhung der Steifigkeit und zur Senkung der Dicke kann der verspritzte Kunststoff durch Partikel, wie Glaskugeln, Talkum, kalzinierte Kreide, Kurzfasern aus Glas oder dergleichen verstärkt sein.

Auch können Duromere und Kunstharze wie Polyester, Epoxyharze, Vinylharze angespritzt und in der Form ausgehärtet werden. Diese Kunststoffe sind besonders steif.

Schliesslich kann eine dickere, geschäumte Schicht aus Polyethylen, Polystyrol oder Polyurethan an den vorgeformten Behälter 10 angespritzt werden. Ein so aussen verstärkter Behälter zeichnet sich durch hohe Schlagfestigkeit und Stabilität bei sehr geringem Gewicht aus.

Ausserdem wirkt eine beispielsweise angeschäumte Schicht wärmeisolierend, was bei der Verwendung des Behälters als Fertigmenü-Schale nach der Erwärmung im Mikrowellenherd von Vorteil ist.

Nach dem beschriebenen Verfahren hergestellte Behälter sind beispielsweise im Autoklav bei einer Temperatur von über 100°C über mehrere Stunden bei z.B. zwei bis drei Bar Gegendruck sterilisierbar. Optimale Werte stellen Temperaturen von beispielsweise 115-126°C und bevorzugt 121°C während 15 min bis 1 Stunde, vorzugsweise 30 Minuten, dar.

Auf den ringförmigen, faltenfreien Rand 21 (Figur 8 und 9) ist ein Deckel 19 aus Kunststoff in Form eines Festverschlusses oder peelbar) auf die Kunststoffinnenschicht 12 aufsiegelbar. Dabei bleibt die Wahl des umspritzten Kunststoffes weitgehend frei. Beispielsweise können auch rezyklierte Kunststoffe zum Umspritzen verwendet werden.

Durch das Siegeln auf die Kunststoffinnenschicht wird eine denkbare Diffusionszone zum Eindiffundieren von Sauerstoff und anderen das Füllgut beeinflussenden Gasen minimal gehalten.

Im folgenden sind in einer Tabelle weitere typische Beispiele für einige zur Herstellung des Behälters 10 besonders geeignete Verbundlaminate zusammengestellt:

| Aussenschicht | Kleber | Aluminium | Haftvermittler | Innenschicht |
|---|---|---|---|---|
| 15-20µm OPP | PUR | 8-25µm Al | PUR oder | 50-75µm PP |
| 12µm PET | -"- | -"- | Primacor (EAA) oder | 50-75µmP/PP |
| 15-20µm oPE | -"- | -"- | Adcote oder | 50-75µmPE/PP |
| 15µm oPA | -"- | -"- | Morprime (plus $TiO_2$) | 50-75µm PS (plus Farbstoffe ($TiO_2$) Additive) |

Schliesslich betrifft vorliegende Erfindung die Verwendung der Behälter nach der Erfindung für die Aufnahme von organischen Materialien, die einem mikrobiellen Angriff ausgesetzt sind und insbesondere die Verwendung der Behälter für die Aufnahme von Nahrungsmitteln, wobei die Nahrungsmittel im Behälter sterilisierbar sind.

**Patentansprüche**

1. Verfahren zum Herstellen eines becherförmigen sterilisierbaren Behälters (10) aus einem streckziehfähigen Verbundlaminat (10') einer Gesamtwandstärke zwischen 30 und 200 µm mit einer Aluminiumfolie (14) einer Dicke kleiner 40 µm, einer siegelfähigen Kunststoffinnenschicht (12) hohen Dehnvermögens und einer Kunststoffaussenschicht (16) hohen Dehn- und Lastaufnahmevermögens, wobei die Seiten-

7

wand (17) des Behälters (10) unter einem Seitenwandwinkel (a) bezuglich der Richtung senkrecht zum Behälterboden verläuft, dadurch gekennzeichnet, dass das Verbundmaterial (10') bei einem Seitenwandwinkel (a) von im wesentlichen ≦ 30° unter Verwendung glattwandiger Formwerkzeuge (30,22) faltenfrei kombiniert tief- und streckgezogen wird, wobei das kombinierte Tiefziehen und Streckziehen mittels eines Stempels erfolgt, wobei das Verbundmaterial (10') in einem Tiefziehschritt auf 30-70% der Tiefe (H) des fertigen Behälters tiefgezogen und in einem anschliessenden Tiefzieh-Streckziehschritt auf 75-95% der Tiefe (H) des fertigen Behälters gezogen wird und in einem danach anschliessenden Streckziehschritt auf die Tiefe und Weite des fertigen Behälters (10) gebracht wird.

2. Verfahren nach Anspruch 1, dadurch gekennzeichnet, dass bei einem Seitenwandwinkel (a) in einem Bereich von 15° ≦ (a) ≦ 30° das kombinierte Tiefziehen und Streckziehen erfolgt.

3. Verfahren nach Anspruch 1, dadurch gekennzeichnet, dass das kombinierte Tiefziehen und Streckziehen mittels eines radial expandierbaren Stempels erfolgt und während und/oder nach dem Streckziehschritt unter radialer Expansion des Stempels (30) das Verbundmaterial (10') auf die Tiefe (H) und Weite des fertigen Behälters gebracht wird.

4. Verfahren nach Anspruch 3, dadurch gekennzeichnet, dass der Stempel (30) aus einem flexiblen, gummielastischen Werkstoff besteht, der unter axialer Druckbelastung radial expandiert.

5. Verfahren nach Anspruch 1, dadurch gekennzeichnet, dass das Tiefziehen, das Tief-Streckziehen und das Streckziehen nacheinander mit gesteuerter Niederhaltekraft des Niederhalters erfolgt.

6. Verfahren nach Anspruch 5, dadurch gekennzeichnet, dass der Tiefziehschritt mit einer Niederhaltekraft des Niederhalters derart erfolgt, dass das zum Tiefziehschritt benötigte Material aus dem Bereich der Matrize und Niederhalters nachgezogen wird, dass der Tiefzieh-Streckziehschritt mit einer Niederhaltekraft des Niederhalters derart erfolgt, dass das benötigte Material nur noch teilweise nachgezogen und gleichzeitig gestreckt wird und dass der Streckziehschritt mit einer Niederhaltekraft des Niederhalters derart erfolgt, dass kein Material aus dem Bereich der Matrize und des Niederhalters nachzieht und das zwischen Matrize und Stempel befindliche Material gestreckt wird.

7. Verfahren nach einem der Ansprüche 1 bis 6, dadurch gekennzeichnet, dass das Tiefziehen, das Tief-Streckziehen und das Streckziehen schmierungslos erfolgen.

8. Verfahren nach einem der Ansprüche 1 bis 7, dadurch gekennzeichnet, dass auf die Aussenseite des Behälters eine weitere Kunststoffschicht (18) angespritzt wird.

9. Becherförmiger, sterilisierbarer Behälter aus einem streckziehfähigen Verbundlaminat (10') mit einer Aluminiumfolie (14) einer Dicke kleiner 40 μm, einer siegelfähigen Kunststoffinnenschicht (12) hohen Dehnvermögens und einer Kuststoffaussenschicht (16) hohen Dehn- und Lastaufnahmevermögens, wobei die Seitenwand des Behälters unter einem Seitenwandwinkel (a) bezüglich der Richtung senkrecht zum Behälterboden verläuft, dadurch gekennzeichnet, dass die Aluminiumfolie (14) eine Dicke zwischen 8 und 40 μm aufweist, dass die Kunststoffinnenschicht (12) eine Dicke zwischen 30 und 80 μm aufweist, dass die Kunststoffaussenschicht (16) eine Dicke zwischen 1 und 40 μm aufweist und dass die Behälterwandung faltenfrei ist.

10. Behälter nach Anspruch 9, dadurch gekennzeichnet, dass die Aluminiumfolie (14) aus Aluminium mit einem Al-Gehalt von 98,6% und mehr besteht.

11. Behälter nach Anspruch 9 oder 10, dadurch gekennzeichnet, dass die siegelbare Kunststoffinnenschicht (12) aus thermoplastischen Kunststoffen, wie Polypropylen, Polyethylen, Polystyrol, Polyethylenterephtalat, Polyamid oder deren Copolymeren besteht.

12. Behälter nach einem der Ansprüche 9 bis 11, dadurch gekennzeichnet, dass die Kunststoffaussenschicht (16) aus jeweils orientiertem thermoplastischem Kunststoff, wie Polyethylen, Polypropylen, Polyethylenterephtalat, Polyamid oder deren Copolymeren besteht.

**13.** Behälter nach einem der Ansprüche 9 bis 12, dadurch gekennzeichnet, dass die Kunststoffaussenschicht (16) ein Lack, wie ein modifizierter Epoxylack oder ein Polyurethanlack ist.

**14.** Behälter nach einem der Ansprüche 9 bis 13, dadurch gekennzeichnet, dass das Verbundlaminat (10') einen Schichtaufbau (von aussen nach innen) mit 12 bis 20 $\mu$m Polyethylenterephtalat/8 bis 25 $\mu$m Aluminium/50 bis 75 $\mu$m Polyethylen hat.

**15.** Behälter nach einem der Ansprüche 9 bis 14, dadurch gekennzeichnet, dass aussen eine weitere versteifende Kunststoffschicht (18) einer Dicke zwischen 0,1 und 0,6 mm an die Aussenseite des Behälters (10) angespritzt ist.

**16.** Behälter nach Anspruch 15, dadurch gekennzeichnet, dass die weitere Kunststoffschicht (18) aus Polypropylen, Polyethylen oder deren Copolymeren, Polyethylenterephtalat, Polyamid, recyclierten Kunststoffen, Acryl-Butadien-Styrol, Polykarbonat oder geschäumten Kunststoffen wie geschäumtem Polypropylen, Polyethylen, Polystyrol oder Polyurethan bestehen.

**17.** Behälter nach einem der Ansprüche 9 bis 14, dadurch gekennzeichnet, dass er mittels einer Siegelschicht (19) verschlossen ist, die auf die siegelfähige Kunststoffinnenschicht (12) in einer umlaufenden, geschlossenen Randzone (21) heissgesiegelt ist.

**18.** Verwendung der Behälter nach Anspruch 9 für die Aufnahme von organischen Materialien, die einem mikrobiellen Angriff ausgesetzt sind.

**19.** Verwendung der Behälter nach Anspruch 9 für die Aufnahme von Nahrungsmitteln, wobei die Nahrungsmittel im Behälter sterilisierbar sind.

**Claims**

**1.** Method of making a cup-shaped sterilisable container (10) from a stretch-formable composite laminate (10') having an overall wall thickness of between 30 and 200 $\mu$m, comprising an aluminium foil (14) having a thickness of less than 40 $\mu$m, a heat-sealable inner plastic layer (12) having high extensibility and an outer plastic layer (16) having high extensibility and a high load-bearing capacity, the side wall (17) of the container (10) extending at a side wall angle (a) with respect to the direction perpendicular to the bottom of the container, characterised in that the composite material (10') is subjected to crease-free combined deep drawing and stretch forming using smooth-walled moulds (30, 22) with a side wall angle (a) of substantially $\leq$ 30°, the combined deep drawing and stretch forming being effected by means of a male mould, the composite material (10') being deep-drawn to 30-70 % of the depth (H) of the finished container in a deep-drawing step, then being drawn to 75-95 % of the depth (H) of the finished container in a subsequent deep-drawing/stretch-forming step and then being brought to the depth and width of the finished container (10) in a subsequent stretch-forming step.

**2.** Method according to claim 1, characterised in that the combined deep drawing and stretch forming is effected with a side wall angle (a) in the range of 15° $\leq$ (a) $\leq$ 30°.

**3.** Method according to claim 1, characterised in that the combined deep drawing and stretch forming is effected by means of a radially expandable male mould and the composite material (10') is brought to the depth (H) and width of the finished container during and/or after the deep-drawing step with radial expansion of the male mould (30).

**4.** Method according to claim 3, characterised in that the male mould (30) consists of a flexible rubbery-elastic material which expands radially under axial pressure loading.

**5.** Method according to claim 1, characterised in that the deep drawing, deep drawing/stretch forming and stretch forming are carried out one after the other with a controlled clamping force of the clamping device.

**6.** Method according to claim 5, characterised in that the deep-drawing step is effected with a clamping force of the clamping device such that the material required for the deep-drawing step is drawn out of the region of the female mould and the clamping device, that the deep-drawing/stretch-forming step is effected with a clamping force of the clamping device such that the material required is only partially drawn further and is simultaneously stretched and that the stretch-forming step is effected with a clamping force of the clamping device such that no material is drawn out of the region of the female mould and the clamping device and the material situated between the female mould and the male mould is stretched.

7. Method according to one of claims 1 to 6, characterised in that the deep drawing, deep drawing/stretch forming and stretch forming are effected without lubrication.

8. Method according to one of claims 1 to 7, characterised in that a further plastic layer (18) is sprayed on to the outer face of the container.

9. Cup-shaped sterilisable container made of a stretch-formable composite laminate (10') comprising an aluminium foil (14) having a thickness of less than 40 $\mu$m, a heat-sealable inner plastic layer (12) having high extensibility and an outer plastic layer (16) having high extensibility and a high load-bearing capacity, the side wall of the container extending at a side wall angle (a) with respect to the direction perpendicular to the bottom of the container, characterised in that the aluminium foil (14) has a thickness of between 8 and 40 $\mu$m, that the inner plastic layer (12) has a thickness of between 30 and 80 $\mu$m, that the outer plastic layer (16) has a thickness of between 1 and 40 $\mu$m and that the container wall is crease-free.

10. Container according to claim 9, characterised in that the aluminium foil (14) consists of aluminium with an Al content of 98.6 % or more.

11. Container according to claim 9 or claim 10, characterised in that the heat-sealable inner plastic layer (12) consists of thermoplastics, such as polypropylene, polyethylene, polystyrene, polyethylene terephthalate, polyamide or copolymers thereof.

12. Container according to one of claims 9 to 11, characterised in that the outer plastic layer (16) consists of oriented thermoplastic, such as polyethylene, polypropylene, polyethylene terephthalate, polyamide or copolymers thereof.

13. Container according to one of claims 9 to 12, characterised in that the outer plastic layer (16) is a lacquer, such as a modified epoxy lacquer or a polyurethane lacquer.

14. Container according to one of claims 9 to 13, characterised in that the composite laminate (10') has a laminated structure (from the outside to the inside) comprising 12 to 20 $\mu$m polyethylene terephthalate/8 to 25 $\mu$m aluminium/50 to 75 $\mu$m polyethylene.

15. Container according to one of claims 9 to 14, characterised in that a further reinforcing plastic layer (18) having a thickness of between 0.1 and 0.6 mm is sprayed on externally to the outer face of the container (10).

16. Container according to claim 15, characterised in that the further plastic layer (18) consists of polypropylene, polyethylene or copolymers thereof, polyethylene terephthalate, polyamide, recycled plastics, acryl-butadiene-styrene, polycarbonate or foamed plastics, such as foamed polypropylene, polyethylene, polystyrene or polyurethane.

17. Container according to one of claims 9 to 14, characterised in that it is sealed by means of a heat-sealable coating (19) which is heat-sealed on to the heat-sealable inner plastic layer (12) in a circumferential closed edge zone (21).

18. Use of the containers according to claim 9 for holding organic materials subjected to microbial attack.

19. Use of the containers according to claim 9 for holding foodstuffs, the foodstuffs being sterilisable in the container.

**Revendications**

1. Procédé de fabrication d'un récipient stérilisable en forme de bol (10) à partir d'un stratifié composite susceptible d'étirage (10') ayant une épaisseur totale de paroi comprise entre 30 et 200 $\mu$m, comportant une feuille d'aluminium (14) d'épaisseur inférieure à 40 $\mu$m, une couche interne de matière plastique scellable (12) ayant une capacité d'allongement élevée et une couche externe de matière plastique (16) ayant une capacité d'allongement et de charge élevée, la paroi latérale (17) du récipient (10) formant un angle de paroi latérale (a) avec la direction perpendiculaire au fond du récipient, caractérisé en ce que le composite (10') est soumis à un emboutissage profond et un étirage combinés en l'absence de plis pour un angle de paroi latérale (a) sensiblement ≤ 30° par utilisation d'outils de formage (30, 22) à paroi lisse, l'emboutissage profond et l'étirage combinés s'effectuant au moyen d'un poinçon, le composite (10') étant embouti au cours d'une étape d'emboutissage profond à 30 à 70 % de la profondeur (H) du récipient fini et étant étiré au cours d'une étape suivante d'emboutissage profond-étirage à 75 à 95 % de la profondeur (H) du récipient fini et étant amené à la profondeur et à la largeur du récipient fini (10) au cours d'une étape subséquente d'étirage.

2. Procédé selon la revendication 1, caractérisé en ce que l'emboutissage profond et l'étirage combinés s'effectuent pour un angle de paroi latérale (a) de l'ordre de 15° ≤ (a) ≤ 30°.

3. Procédé selon la revendication 1, caractérisé en ce que l'emboutissage profond et l'étirage combinés s'effectuent au moyen d'un poinçon à expansion radiale et que le composite (10') est amené à la profondeur (H) et à la largeur du récipient fini pendant et/ou après l'étape d'étirage, sous l'effet de l'expansion radiale du poinçon (30).

4. Procédé selon la revendication 3, caractérisé en ce que le poinçon (30) est en un matériau souple, élastique, qui s'expanse radialement sous l'effet d'une charge de pression axiale.

5. Procédé selon la revendication 1, caractérisé en ce que l'emboutissage profond, l'emboutissage profond-étirage et l'étirage s'effectuent successivement, pour une force de serrage contrôlée du serre-flans.

6. Procédé selon la revendication 5, caractérisé en ce que l'étape d'emboutissage profond s'effectue pour une force de serrage du serre-flans telle que le matériau nécessaire à l'emboutissage profond subisse un fluage dans la zone de la matrice et du serre-flans, que l'étape d'emboutissage profond-étirage s'effectue pour une force de serrage du serre-flans telle que le matériau nécessaire ne subisse plus qu'un fluage partiel tout en étant étiré et que l'étape d'étirage s'effectue pour une force de serrage du serre-flans telle que le matériau ne subisse plus aucun fluage dans la zone de la matrice et du serre-flans et que le matériau se trouvant dans la zone entre la matrice et le poinçon soit étire.

7. Procédé selon l'une des revendications 1 à 6, caractérisé en ce que l'emboutissage profond, l'emboutissage profond-étirage et l'étirage s'effectuent sans lubrification.

8. Procédé selon l'une des revendications 1 à 7, caractérisé en ce qu'on pulvérise une couche supplémentaire de matière plastique (18) sur la face externe du récipient.

9. Récipient stérilisable en forme de bol, en stratifié composite susceptible d'étirage (10'), comportant une feuille d'aluminium (14) d'épaisseur inférieure à 40 $\mu$m, une couche interne en matière plastique scellable (18) ayant une capacité d'allongement élevée et une couche externe de matière plastique (16) ayant une capacité d'allongement et de charge élevée, la paroi latérale du récipient formant un angle de paroi latérale (a) avec la direction perpendiculaire au fond du récipient, caractérisé en ce que la feuille d'aluminium (14) présente une épaisseur comprise entre 8 et 40 $\mu$m, que la couche interne de matière plastique (12) présente une épaisseur comprise entre 30 et 80 $\mu$m, que la couche externe de matière plastique (16) présente une épaisseur comprise entre 1 et 40 $\mu$m et que la paroi du récipient est dépourvue de plis.

10. Récipient selon la revendication 9, caractérisé en ce que la feuille d'aluminium (14) est en aluminium présentant une teneur en Al supérieure ou égale à 98,6%.

**11.** Récipient selon la revendication 9 ou 10, caractérisé en ce que la couche interne de matière plastique scellable (12) est en matières thermoplastiques, telles que polypropylène, polyéthylène, polystyrène, polyéthylène-téréphtalate, polyamide ou leurs copolymères.

**12.** Récipient selon l'une des revendications 9 à 11, caractérisé en ce que la couche externe de matière plastique (16) est en matière thermoplastique orientée, telle que polyéthylène, polypropylène, polyéthylène-téréphtalate,polyamide ou leurs copolymères.

**13.** Récipient selon l'une des revendications 9 à 12, caractérisé en ce que la couche externe de matière plastique (16) est une laque, par exemple une laque époxy modifiée ou une laque de polyuréthanne.

**14.** Récipient selon une des revendications 9 à 13, caractérisé en ce que le stratifié composite (10') présente une structure en couches composée (de l'extérieur vers l'intérieur) de 12 à 20 $\mu$m de polyéthylène-téréphtalate de 8 à 25 $\mu$m d'aluminium/de 50 à 75 $\mu$m de polyéthylène.

**15.** Récipient selon une des revendications 9 à 14, caractérisé en ce qu'on pulvérise extérieurement une couche de matière plastique supplémentaire rigidifiante (18) d'épaisseur comprise entre 0,1 et 0,6 mm sur la face externe du récipient (10).

**16.** Récipient selon la revendication 15, caractérisé en ce que la couche de matière plastique supplémentaire (18) est en polypropylène, polyéthylène ou leurs copolymères, polyéthylène-téréphtalate, polyamide, matières plastiques recyclées, acryl-butadiène-styrène, polycarbonate ou en matières plastiques moussées, telles que polypropylène, polyéthylène, polystyrène ou polyuréthanne moussés.

**17.** Récipient selon l'une des revendications 9 à 14, caractérisé en ce qu'il est fermé au moyen d'une couche de scellement (19) qui est thermoscellée sur la couche interne de matière plastique scellable (12) dans une zone bord (21) circonférentielle fermée.

**18.** Utilisation des récipients selon la revendication 9 pour loger des matières organiques exposées à une attaque microbienne.

**19.** Utilisation des récipients selon la revendication 9 pour loger des aliments, les aliments étant stérilisa-bles dans le récipient.

**Fig. 1**

**Fig. 2**

**Fig. 3**

13

**Fig. 4**

**Fig. 5**

**Fig. 6**

# Fig. 7

**Fig. 8**

15  19  17  21

H

D/2

12
14
16
18

α

**Fig. 9**

21

10

17

15

α

① ② ③ ④ ⑤

**Fig. 10**

rel. Dicke

① ② ③④⑤

1.6
1.4
1.2
1.0
0.8

Messpunkte